# EUROPÄISCHE PATENTSCHRIFT

(11) **EP 1 884 435 B1**
(45) Veröffentlichungstag und Bekanntmachung des Hinweises auf die Patenterteilung: **01.07.2009**
(21) Anmeldenummer: 07008745.7
(22) Anmeldetag: 30.04.2007
(51) Int. Cl.: B61L 15/00, B60R 16/03

(54) **Schienenwagen, insbesondere zur Personenbeförderung, mit separatem Fahrzeugspeicher**
Rail vehicle, in particular for passenger transport, with separate vehicle memory
Véhicule sur rail, en particulier pour le transport de personnes, doté de mémoire de véhicule séparé

(30) Priorität: 27.07.2006 DE 202006011687 U
(43) Veröffentlichungstag der Anmeldung: 06.02.2008
(73) Patentinhaber: GSP Sprachtechnologie Gesellschaft für elektronische Sprachsysteme mbH, 12247 Berlin (DE)
(72) Erfinder: Nulis, Kostas, 13509 Berlin (DE)
(74) Vertreter: Jungblut, Bernhard Jakob

(56) Entgegenhaltungen:
- WO-A-20/05082696
- DE-A1- 4 408 261
- DE-A1- 10 114 673
- DE-C1- 19 830 053
- US-A- 5 442 553
- SCHULTES G: "BUSSYSTEME DES INTERCITYEXPRESS*). ÖTHE BUS SYSTEMS OF THE INTERCITYEXPRESS" ZEITSCHRIFT FUR EISENBAHNWESEN UND VERKEHRSTECHNIK. DIE EISENBAHNTECHNIK + GLASERS ANNALEN, GEORG SIEMENS VERLAGSBUCHHANDLUNG. BERLIN, DE, Bd. 116, Nr. 11 / 12, 1. November 1992 (1992-11-01), Seiten 438-442, XP000332327 ISSN: 0941-0589

## Beschreibung

### Gebiet der Erfindung

Die Erfindung betrifft ein in der Regel, aber nicht notwendigerweise passiv angetriebenes Fahrzeug, insbesondere einen eigenantriebslosen Schienenwagen, mit einem Fahrzeugprozessor, mit einem Fahrzeugbus sowie mit einem mit dem Fahrzeugprozessor verbundenen Fahrzeugspeicher, welcher Fahrzeug-individuelle Daten gespeichert enthält.

Als passiv angetriebene Fahrzeuge sind Fahrzeuge bezeichnet, welche keinen eigenen Antriebsmotor aufweisen, sondern mittels eines separaten Motorfahrzeuges gezogen oder geschoben werden. Insbesondere kann es sich dabei um Schienenwagen handeln, die aneinander gekoppelt und mit einer Antriebslok verbunden einen Schienenzug bilden. Solche Schienenwagen können für den Gütertransport oder für die Personenbeförderung ausgebildet sein.

Stand der Technik und Hintergrund der Erfindung.

Schienenwagen des eingangs genannten Ausbaus sind aus der Praxis bekannt. Hierbei sind der Fahrzeugprozessor sowie der Fahrzeugspeicher als bauliche Einheit, nämlich Fahrzeugrechner, ausgebildet. Wird ein Fahrzeugrechner aus dem Schienenwagen ausgebaut, so wird auf Grund der baulichen Einheit aus Fahrzeugprozessor und Fahrzeugspeicher auch der Fahrzeugspeicher mit entfernt. Im Falle eines Defektes wird dabei in der Regel keine Reparatur des Fahrzeugrechners erfolgen, sondern ein Austausch. Auch kann, unabhängig vom Vorliegen eines Defektes, eine neuere Generation eines Fahrzeugrechners mit verbesserten und/oder erweiterten Funktionalitäten durch Austausch eingebaut werden. Die DE 198 30 053 C1 offenbart einen derartigen Fahrzeugrechner.

Nachteilig bei diesem Stand der Technik ist, dass bei einem Austausch des Fahrzeugrechners der Fahrzeugspeicher des neuen Fahrzeugrechners mit den Fahrzeug-individuellen und sonstigen Daten neu geladen werden muss. Dies ist aufwändig.

### Technisches Problem der Erfindung.

Der Erfindung liegt das technische Problem zu Grunde, einen Schienenwagen anzugeben, dessen Fahrzeugprozessor ausgetauscht werden kann, ohne dass der Fahrzeugspeicher neu mit Daten beladen zu werden braucht.

Grundzüge der Erfindung und bevorzugte Ausführungsformen.

Zur Lösung dieses technischen Problems lehrt die Erfindung, dass der Fahrzeugprozessor und der Fahrzeugspeicher räumlich getrennte bauliche Einheiten bilden, wobei der Fahrzeugprozessor sowie der Fahrzeugspeicher jeweils unabhängig voneinander mit dem Fahrzeugbus verbunden sind.

Die Erfindung beruht auf der Erkenntnis, dass auf Grund des ohnehin vorhandenen Fahrzeugbus ein Datenstrom zwischen Fahrzeugprozessor und Fahrzeugspeicher auch über den Fahrzeugbus geleitet werden kann. Eine ausschließliche Verbindung von Fahrzeugprozessor und Fahrzeugspeicher über einen Prozessorbus ist nicht erforderlich für die Funktion. Die Erfindung nutzt dieses Erkenntnis dazu, den Fahrzeugspeicher separat von dem Fahrzeugprozessor als eigenständige bauliche Einheit auszubilden. Dies ist auch problemlos möglich, da über den Fahrzeugbus, beispielsweise einen IBIS-Wagenbus, auch die Stromversorgung des Fahrzeugspeichers erfolgen kann. Eine zusätzliche Verdrahtung des Fahrzeuges ist zur Ausübung der Erfindung nicht erforderlich.

Mit der Erfindung wird erreicht, dass der Fahrzeugprozessor (typischerweise einschließlich seiner Prozessorspeicher mit Betriebsprogramm und Prozessorresidenten Daten und Interface zum Fahrzeugbus) ausgetauscht werden kann, ohne dass ein Austausch auch des Fahrzeugspeichers erforderlich ist. Dadurch, dass der Fahrzeugspeicher im Fahrzeug verbleibt, verbleiben auch die Daten unverändert in dem Fahrzeug. Ein neu eingebauter Fahrzeugprozessor kann über den Fahrzeugbus sofort auf die Daten des Fahrzeugspeichers zugreifen, ohne dass eine Reprogrammierung des Fahrzeugspeichers oder des Fahrzeugprozessors erfolgen muss. Insbesondere kann ein einheitliches Betriebsprogramm in den Fahrzeugprozessoren gespeichert sein. Im Ergebnis kann beispielsweise bei der Umrüstung einer Vielzahl von Fahrzeugen auf einen moderneren Fahrzeugprozessor für jedes Fahrzeug ein identischer Fahrzeugprozessor angeschlossen werden, ohne die Notwendigkeit der Reprogrammierung von Daten oder Fahrzeug-individuelle Anpassung des Betriebsprogrammes des Fahrzeugprozessors. Eine solche Umrüstung ist mit der Erfindung folglich erheblich einfacher, schneller und kostengünstiger möglich. Entsprechendes gilt natürlich auch bei einem einzelnen Austausch, beispielsweise einem Reparaturaustausch.

Der Anschluss des Fahrzeugspeichers an den Fahrzeugbus kann durch parallele Aufschaltung auf den Fahrzeugbus oder durch Einschleifen in den Fahrzeugbus erfolgen. Der Anschluss kann als lösbare elektrische Steckverbindung erfolgen. Im Falle des Einschleifens ist dann vor dem Anschluss des Fahrzeugspeichers eine Busbrücke aufzutrennen, die beispielsweise durch einen Brückenstecker gebildet sein kann.

Im Rahmen der Erfindung bestehen die verschiedensten Möglichkeiten der Weiterbildung.

Typischerweise wird der Fahrzeugprozessor lösbar mit dem Fahrzeugbus verbunden sein. Dies kann über übliche Steckverbindungen erfolgen.

Ein Fahrzeugprozessor gemäß der Erfindung ist im Kern ein üblicher Fahrzeugrechner, mit allen üblichen Komponenten und Interfaces, jedoch reduziert um den erfindungsgemäß separat angeordneten Fahrzeugspeicher.

Der Fahrzeugspeicher kann einen Speicherbereich umfassen, in welchem als Fahrzeug-individuelle Daten eine Fahrzeugidentifikationsnummer und/oder eine Fahrzeugtypidentifikationsnummer permanent gespeichert ist. Eine Fahrzeugidentifikationsnummer ist eine beliebige Zeichenfolge (Zahlen Buchstaben und/oder sonstige Zeichen), die für ein Fahrzeug nur einmal vergeben wird. Anhand der Fahrzeugidentifikationsnummer ist das betreffende Fahrzeug ein-eindeutig identifiziert. Üblicherweise reicht eine bis zu 12-stellige Fahrzeugidentifikationsnummer für diese Zwecke aus. Eine Fahrzeugtypidentifikationsnummer ist eine beliebige Zeichenfolge, welche die Fahrzeuggattung und/oder den Fahrzeugtyp identifiziert. Gleiche Fahrzeuggattungen bzw. Fahrzeugtypen haben die gleiche Fahrzeugtypidentifikationsnummer. Eine permanente Speicherung meint, dass die betreffenden Daten nicht verändert werden können und/oder nicht zur Veränderung bestimmt sind.

Der Fahrzeugspeicher kann des Weiteren einen Speicherbereich umfassen, in welchem Fahrzeug-spezifische Ausstattungsdaten zu Ausstattungsmerkmalen permanent oder reprogrammierbar gespeichert sind. Fahrzeug-spezifische Ausstattungsdaten umfassen beispielsweise Daten zur Art, Anzahl und Adresse von Displays zur Fahrgastinformation, Daten zur Anzahl, Art und Adresse von Fahrgasttelekommunikationsanschlüssen, Daten zur Anzahl, Art und Adresse von Fahrgastzählgeräten, Daten zur Anzahl, Art und Adresse von Displays zur Sitzplatzreservierung, sowie Daten zur erforderlichen Betriebssoftware (Versionsnummer) und Hardware bei dem betreffenden Fahrzeug. Diese Aufzählung ist lediglich beispielhaft und nicht abschließend. Eine permanente Speicherung solcher Daten entspricht der vorstehenden Definition. Eine reprogrammierbare Speicherung solcher Daten meint, dass die Daten durch Reprogrammierung geändert werden können, beispielsweise, wenn die Art, Anzahl oder Adresse der vorstehenden Komponenten in dem Fahrzeug im Wege der Modernisierung oder Aufrüstung geändert werden.

Ein Fahrzeugspeicher mit zumindest einigen der vorstehenden Funktionalitäten wird auch Fahrzeugkonfigurationsspeicher (FKS) genannt.

Bevorzugt ist es, wenn der Fahrzeugprozessor und/oder der Fahrzeugbus ein Interface zum Anschluss eines Programmiergerätes aufweist, mittels welchem Programmiergerät die reprogrammierbaren Fahrzeug-spezifischen Ausstattungsdaten reprogrammierbar sind.

Insbesondere handelt es sich bei einem erfindungsgemäßen Fahrzeug um einen Schienenwagen zur Personenbeförderung.

Schließlich betrifft die Erfindung ein Schienenfahrzeug mit einer Mehrzahl von miteinander verbundenen, insbesondere hintereinander gekoppelten erfindungsgemäßen Schienenwagen.

Wird ein neuer Fahrzeugprozessor an das Fahrzeug bzw. den Fahrzeugbus angeschlossen, so wird das folgende Initialisierungsverfahren durchgeführt. Hierzu liest der Fahrzeugprozessor zunächst den Fahrzeugspeicher aus. Dann aktiviert ein Initialisierungsprogramm des Fahrzeugprozessors Softwaremodule des Betriebsprogrammes des Fahrzeugprozessors, die für den Betrieb der Fahrzeug-spezifischen Ausstattungsmerkmale, beispielsweise, wie vorstehend erläutert, erforderlich sind, ggf. mit Anpassung der Softwaremodule an die betreffenden Ausstattungsmerkmale. Dann kann optional ein Funktionstest der detektierten Ausstattungsmerkmale erfolgen mit Ausgabe einer Fehlermeldung im Falle eines nicht ordnungsgemäß funktionierenden Ausstattungsmerkmals.

Das vorstehende Initialisierungsverfahren kann im übrigen auch bei jeder Aktivierung des Fahrzeugprozessors erneut durchgeführt werden, wobei dann auch zwischenzeitlich eingetretene Fehler detektiert und ausgegeben werden. Schließlich ist es möglich, dass auch bei aktiviertem Fahrzeugprozessor das Initialisierungsverfahren entweder durch eine manuelle Betätigung ("reset") oder automatisch in definierten Zeitabständen und/oder auf Grund eines Initialisierungssteuersignals durchgeführt wird.

Eine Reprogrammierung von reprogrammierbaren Daten des Fahrzeugspeichers, beispielsweise von Fahrzeug-spezifischen Ausstattungsdaten kann dadurch erfolgen, dass an den Fahrzeugprozessor oder an den Fahrzeugbus ein Programmiergerät angeschlossen und mittels einer ServiceSoftware des Programmiergerätes die betreffenden Daten reprogrammiert werden. Es versteht sich, dass die Servicesoftware Sicherungsfunktionen umfassen sollte, die eine Reprogrammierung nur durch autorisierte Personen zuläßt. Geeignete Routinen sind dem Durchschnittsfachmann geläufig.

Im Folgenden wird die Erfindung anhand einer lediglich eine Ausführungsform darstellenden Figur näher erläutert. Es zeigt:

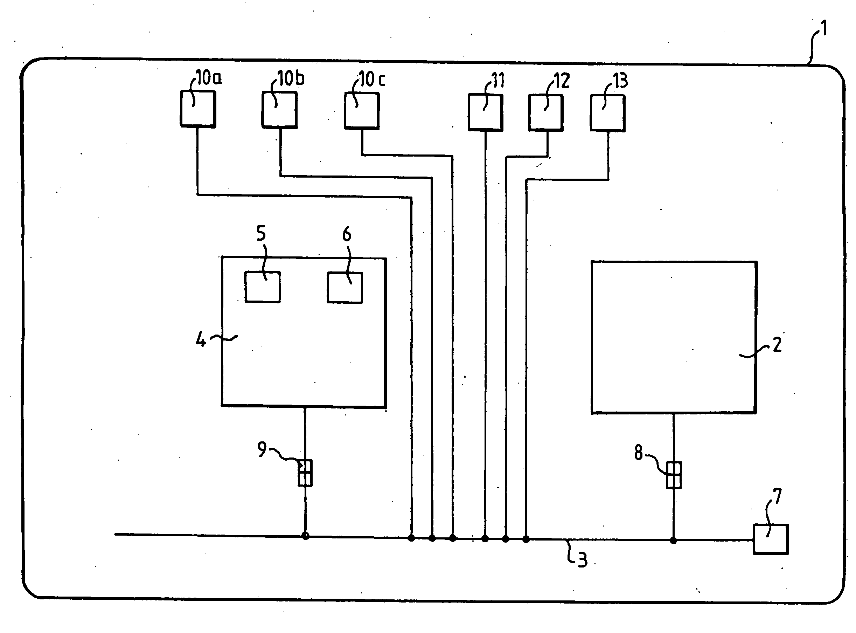

- Figur 1:: eine schematische Darstellung eines erfindungsgemäßen Wagens.

In der Figur 1 erkennt man einen eigenantriebslosen Schienenwagen zur Personenbeförderung, mit einem Fahrzeugprozessor 2, mit einem Fahrzeugbus 3 sowie mit einem mit dem Fahrzeugprozessor 2 verbundenen Fahrzeugspeicher 4, welcher Fahrzeug-spezifische Daten gespeichert enthält. Der Fahrzeugprozessor 2 und der Fahrzeugspeicher 4 bilden räumlich getrennte bauliche Einheiten, wobei der Fahrzeugprozessor 2 sowie der Fahrzeugspeicher 4 jeweils mit dem Fahrzeugbus 3 verbunden sind. Der Fahrzeugprozessor 2 ist über eine Prozessorsteckverbindung 8 lösbar mit dem Fahrzeugbus 3 verbunden. Der Fahrzeugspeicher 4 ist über eine Speichersteckverbindung 9 lösbar mit dem Fahrzeugbus 3 verbunden.

Der Fahrzeugspeicher 4 weist einen ersten Speicherbereich 5 auf, in welchem eine Fahrzeugidentifikationsnummer und eine Fahrzeugtypidentifikationsnummer permanent gespeichert sind.

Der Fahrzeugspeicher weist des Weiteren einen zweiten Speicherbereich 6 umfasst, in welchem Fahrzeug-spezifische Ausstattungsdaten permanent oder reprogrammierbar gespeichert sind.

In der Figur 1 erkennt man des Weiteren, dass das Fahrzeug als Ausstattungsmerkmale mehrere Displays zur Fahrgastinformation 10a, 10b, 10c, zumindest einen Fahrgasttelekommunikationsanschluss 11, beispielsweise ein leitungsgebundenes Telefon oder ein Telefoninterface, zumindest ein Fahrgastzählgerät 12, und eine Mehrzahl von Displays 13 (nur eines ist gezeichnet) zur Sitzplatzreservierung aufweist. Weitere übliche elektrisch ansteuerbare Ausstattungsmerkmale können eingerichtet sein, sind jedoch der Übersichtlichkeit halber nicht dargestellt.

In dem zweiten Speicherbereich 6 sind die Daten zu Anzahl, Art und Adresse der vorstehenden Ausstattungsmerkmale gespeichert und durch den Fahrzeugprozessor 2 über den Fahrzeugbus 3 auslesbar.

Der Fahrzeugbus 3 weist ein Interface 7 zum Anschluss eines nicht dargestellten Programmiergerätes aufweist, mittels welchem Programmiergerät die reprogrammierbaren Fahrzeug-spezifischen Ausstattungsdaten, wie vorstehend erläutert, reprogrammierbar sind.

## Patentansprüche

1. Fahrzeug (1), insbesondere eigenantriebsloser Schienenwagen, mit einem Fahrzeugprozessor (2), mit einem Fahrzeugbus (3) sowie mit einem mit dem Fahrzeugprozessor (2) verbundenen Fahrzeugspeicher (4), welcher Fahrzeug-spezifische Daten gespeichert enthält,
**dadurch gekennzeichnet,**
**dass** der Fahrzeugprozessor (2) und der Fahrzeugspeicher (4) räumlich getrennte bauliche Einheiten bilden, wobei der Fahrzeugprozessor (2) sowie der Fahrzeugspeicher (4) jeweils unabhängig von einander mit dem Fahrzeugbus (3) verbunden sind.

2. Fahrzeug (1) nach Anspruch 1, wobei der Fahrzeugprozessor (2) lösbar mit dem Fahrzeugbus (3) verbunden ist.

3. Fahrzeug (1) nach einem der Ansprüche 1 oder 2, wobei der Fahrzeugspeicher (4) einen ersten Speicherbereich (5) umfasst, in welchem eine Fahrzeugidentifikationsnummer und/oder eine Fahrzeugtypidentifikationsnummer permanent gespeichert ist.

4. Fahrzeug (1) nach einem der Ansprüche 1 bis 3, wobei der Fahrzeugspeicher einen zweiten Speicherbereich (6) umfasst, in welchem Fahrzeug-spezifische Ausstattungsdaten permanent oder reprogrammierbar gespeichert sind.

5. Fahrzeug (1) nach einem der Ansprüche 1 bis 4, wobei der Fahrzeugprozessor (2) und/oder der Fahrzeugbus (3) ein Interface (7) zum Anschluss eines Programmiergerätes aufweist, mittels welchem Programmiergerät die reprogrammierbaren Fahrzeugspezifischen Ausstattungsdaten reprogrammierbar sind.

6. Fahrzeug (1) nach einem der Ansprüche 1 bis 5 in der Ausführungsform als eigenantriebsloser Schienenwagen (1) zur Personenbeförderung.

7. Schienenfahrzeug mit einer Mehrzahl von Schienenwagen (1) nach einem der Ansprüche 1 bis 6.

## Claims

1. A vehicle (1), in particular a non-self-propelled rail carriage, comprising a vehicle processor (2), a vehicle bus (3) and a vehicle accumulator (4) connected with the vehicle processor (2), the vehicle accumulator (4) containing stored vehicle-specific data,
**characterized in**
**that** the vehicle processor (2) and the vehicle accumulator (4) form spatially separated structural units, wherein the vehicle processor (2) and the vehicle accumulator (4) are each independently from one another connected with the vehicle bus (3).

2. The vehicle (1) according to claim 1, wherein the vehicle processor (2) is detachably connected with the vehicle bus (3).

3. The vehicle (1) according to one of claims 1 or 2, wherein the vehicle accumulator (4) comprises a first accumulator section (5), in which a vehicle identification number and/or a vehicle type identification number is permanently stored.

4. The vehicle (1) according to one of claims 1 to 3, wherein the vehicle accumulator comprises a second accumulator section (6), in which vehicle-specific equipment data are permanently or reprogrammably stored.

5. The vehicle (1) according to one of claims 1 to 4, wherein the vehicle processor (2) and/or the vehicle bus (3) comprises an interface (7) for the connection of a programming device, by means of which the reprogrammable vehicle-specific equipment data are reprogrammable.

6. The vehicle (1) according to one of claims 1 to 5 in the embodiment as a non-self-propelled rail carriage (1) for passenger transport.

7. A rail vehicle comprising a plurality of rail carriages (1) according to one of claims 1 to 6.

## Revendications

1. Véhicule (1), en particulier wagon sur rails non automoteur, comprenant un processeur (2) du véhicule, un bus (3) du véhicule et un accumulateur (4) du véhicule raccordé avec le processeur du véhicule (2), l'accumulateur (4) du véhicule contenant des données stockées spécifiques pour le véhicule,
**caractérisé en ce**
**que** le processeur du véhicule (2) et l'accumulateur (4) du véhicule forment des unités structurelles séparées spatialement, le processeur (2) du véhicule et l'accumulateur (4) du véhicule chacun étant raccordé indépendamment l'un de l'autre avec le bus (3) du véhicule.

2. Véhicule (1) selon la revendication 1, dans lequel le processeur (2) du véhicule est raccordé de manière amovible avec le bus (3) du vésicule.

3. Véhicule (1) selon une des revendications 1 ou 2, dans lequel l'accumulateur (4) du véhicule comprend une première partie (5) de l'accumulateur, dans laquelle un numéro d'identification du véhicule et/ou un numéro d'identification du type du véhicule est stocké de manière permanente.

4. Véhicule (1) selon une des revendications 1 3, dans lequel l'accumulateur (4) du véhicule comprend une deuxième partie (6) de l'accumulateur, dans laquelle des données spécifiques pour l'équipement du véhicule sont stockées de manière permanente ou reprogrammable.

5. Véhicule (1) selon une des revendications 1 à 4, dans lequel le processeur (2) du véhicule et/ou le bus (3) du véhicule comprend une interface (7) pour le raccordement d'un dispositif de programmation, au moyen duquel les données spécifiques pour l'équipement du véhicule sont reprogrammables.

6. Véhicule (1) selon une des revendications 1 à 5 dans la forme d'exécution comme un wagon (1) sur rails non automoteur pour le transport de passagers.

7. Véhicule sur rails comprenant une pluralité de wagons (1) sur rails selon une des revendications 1 à 6.
